# EUROPÄISCHE PATENTANMELDUNG

(11) **EP 3 428 413 A1**
(43) Veröffentlichungstag der Anmeldung: **16.01.2019**
(21) Anmeldenummer: 18180263.8
(22) Anmeldetag: 28.06.2018
(51) Int. Cl.: F01M 13/04, F02D 41/22

(54) **VERFAHREN ZUM ÜBERWACHEN EINER KURBELGEHÄUSEENTLÜFTUNGSEINRICHTUNG**

(30) Priorität: 13.07.2017 DE 102017211979
(71) Anmelder: Bayerische Motoren Werke Aktiengesellschaft, 80809 München (DE)
(72) Erfinder: Enne, Roman, 4441 Behamberg (AT)

(57) **Zusammenfassung**

Verfahren zum Überwachen einer Kurbelgehäuseentlüftungseinrichtung einer Brennkraftmaschine, wobei Rohgas aus einem Kurbelgehäuse der Brennkraftmaschine durch eine Entlüftungsleitung einem Zentrifugal-Ölabscheider mit einem aktiv antreibbaren Drehelement zum Abscheiden von Öltröpfchen aus dem Rohgas zugeführt wird und als Reingas durch eine Reingasleitung einem Ansaugtrakt der Brennkraftmaschine mit einem Drosselelement, das in einer Strömungsrichtung einer Frischluft nach einer Einleitstelle der Reingasleitung in dem Ansaugtrakt angeordnet ist, zugeführt wird, zur anschließenden Verbrennung in einem Brennraum der Brennkraftmaschine, wobei der Zentrifugal-Ölabscheider ein Drehzahlsignal des Drehelementes ausgibt, das von einem Steuergerät der Brennkraftmaschine ausgewertet wird,
gekennzeichnet, durch folgende Verfahrensschritte:
- Betreiben der Brennkraftmaschine und ständiges Messen einer Drehzahl des Drehelementes,
- Ausschalten oder in einem Schubbetrieb der Brennkraftmaschine, nicht mehr Antreiben des Drehelementes und Schließen des Drosselelementes,
- Weiter Messen der Drehzahl des Drehelementes während eines Auslaufes des Drehelementes,
- Vergleichen der Drehzahl des Drehelementes während des Auslaufes mit einer abgespeicherten Sollwert-Drehzahlauslaufkurve,
- Bei einem von der Sollwert-Drehzahlauslaufkurve abweichenden Abfall der Drehzahl des Drehelementes, Ausgeben eines Störsignales.

Durch das erfindungsgemäße Verfahren zum Überwachen einer Kurbelgehäuseentlüftungseinrichtung ist diese OBD fähig (**O**n-**B**oard-**D**iagnose).

## Beschreibung

Die Erfindung betrifft ein Verfahren zum Überwachen einer Kurbelgehäuseentlüftungseinrichtung mit den Merkmalen aus dem Oberbegriff des Patentanspruchs 1.

Zum technischen Umfeld wird beispielsweise auf die Deutsche Offenlegungsschrift DE 10 2010 002 790 A1 hingewiesen. Aus dieser Offenlegungsschrift ist ein Abscheider zum Abscheiden von Ölnebel aus dem Kurbelgehäuseentlüftungsgas einer Brennkraftmaschine bekannt, ein sogenannter Tellerseparator. An dem Abscheider ist ein Flansch vorgesehen, mit dem der Abscheider unter Herstellung einer Strömungsverbindung an einem Gegenflansch der Brennkraftmaschine anbringbar ist, mit einem Gasreinigungsraum, in dem ein drehbar gelagerter Zentrifugalrotor angeordnet ist und mit einem von dem Gasreinigungsraum durch einen Grundkörper des Abscheiders getrennten Antriebsraum in dem ein Drehantrieb für den Zentrifugalrotor angeordnet ist. Der Drehantrieb ist über eine vom Antriebsraum in den Gasreinigungsraum verlaufende Welle mit dem Zentrifugalrotor verbunden. Der Drehantrieb ist durch mindestens eine mit der Welle verbundene, mit unter Druck stehendem Schmieröl der Brennkraftmaschine beschickbare Rückstoßdüse gebildet. Der Antriebsraum weist hierbei einen Ölraum für aus der Rückstoßdüse austretendes Schmieröl auf.

Das Gesetz schreibt zukünftig vor, dass für derartige Kurbelgehäuseentlüftungseinrichtungen eine Überwachung mittels OBD (On-Board-Diagnose) vorgesehen werden muss. Jedes Blow-By-System, in dem Überdruck herrschen kann, muss zukünftig überwacht werden.

Weiter sind aus der Deutschen Offenlegungsschrift DE 10 2014 114 397 A1, von der die vorliegende Erfindung ausgeht, eine Brennkraftmaschine mit einer Kurbelgehäuseentlüftungseinrichtung sowie ein Verfahren zum Überwachen der Kurbelgehäuseentlüftungseinrichtung bekannt. Es ist eine Brennkraftmaschine mit einer Ansaugluftleitung offenbart, in deren Verlauf ein Verdichter und stromab des Verdichters eine Drosselklappe angeordnet sind. Weiter weist die Brennkraftmaschine eine Kurbelgehäuseentlüftungseinrichtung auf, die eine mit dem Kurbelgehäuse der Brennkraftmaschine verbundene Entlüftungsleitung aufweist, in deren Verlauf ein Kurbelgehäusedruckregelventil angeordnet ist. Die Entlüftungsleitung teilt sich stromab des Druckregelventils in zwei Entlüftungszweige auf, wobei der erste Entlüftungsleitungszweig an einer Anschlussstelle stromauf des Verdichters und der zweite Entlüftungsleitungszweig an einer Anschlussstelle stromab der Drosselklappe an die Ansaugluftleitung angeschlossen ist. In den Entlüftungsleitungszweigen ist je ein Rückschlagventil angeordnet. Die Brennkraftmaschine ist dadurch gekennzeichnet, dass Mittel zur Messung einer Druckdifferenz zwischen dem Druck im Kurbelgehäuse oder in der Entlüftungsleitung stromauf des Kurbelgehäusedruckregelventils einerseits und dem Druck in der Entlüftungsleitung stromab des Kurbelgehäusedruckregelventils andererseits vorgesehen sind. Weiter ist eine Auswerteeinheit vorgesehen, mittels der die gemessene Druckdifferenz auf eine ordnungsgemäße oder eine nicht ordnungsgemäße Funktion der Kurbelgehäuseentlüftungseinrichtung auswertbar ist und ein entsprechendes Signal ausgebbar ist. Weiter ist ein Verfahren zum Überwachen der Kurbelgehäuseentlüftungseinrichtung der Brennkraftmaschine offenbart.

Aufgabe der vorliegenden Erfindung ist es, für eine gattungsgemäße Kurbelgehäuseentlüftungseinrichtung und einen gattungsgemäßen Ölnebelabscheider (Tellerseparator) ein OBD-fähiges Diagnoseverfahren zum Überwachen der Kurbelgehäuseentlüftungseinrichtung aufzuzeigen.

Diese Aufgabe wird verfahrensmäßig durch die Merkmale im kennzeichnenden Teil des Patentanspruchs 1 gelöst.

Die vorliegende Erfindung beschreibt somit ein Konzept zur Überwachung der Ölabscheidung aus dem Blow-By-Gas. Blow-By-Gas ist an den Kolbenringen vorbei, in den Kurbelraum der Brennkraftmaschine strömendes Gas. Hierbei können Öltröpfchen und unverbrannte Kraftstoffreste mitgerissen werden. Damit diese unerwünschten Komponenten nicht zur Verschmutzung von Komponenten wie Turbolader, Drosselklappe, Gaswechselventilen usw. führen, können beispielsweise Tellerseparatoren zu Abscheidung dieser unerwünschten Komponenten eingesetzt werden. Diese arbeiten mittels Zentrifugalkräften, um einzelne Phasen des Gemisches unterschiedlicher Dichten zu trennen und abzuscheiden. Unter Tellerseparatoren werden Zentrifugalölabscheider jeder Art verstanden. Sie werden auch als aktive Ölabscheider bezeichnet.

Das erfindungsgemäße Konzept stellt eine alternative Variante zur Absicherung einer Kurbelgehäuseentlüftungseinrichtung dar. Während sich alle anderen bekannten Konzepte auf zusätzliche Sensoren stützen, deren Auswertung allerdings nicht immer zuverlässig arbeitet, kommt das erfindungsgemäße Konzept ohne zusätzliche Messtechnik aus. Diese Messtechnik (Drehzahlsensorik) ist Bestandteil des Antriebes von Tellerseperatoren (BLDC-Funktionsprinzip).

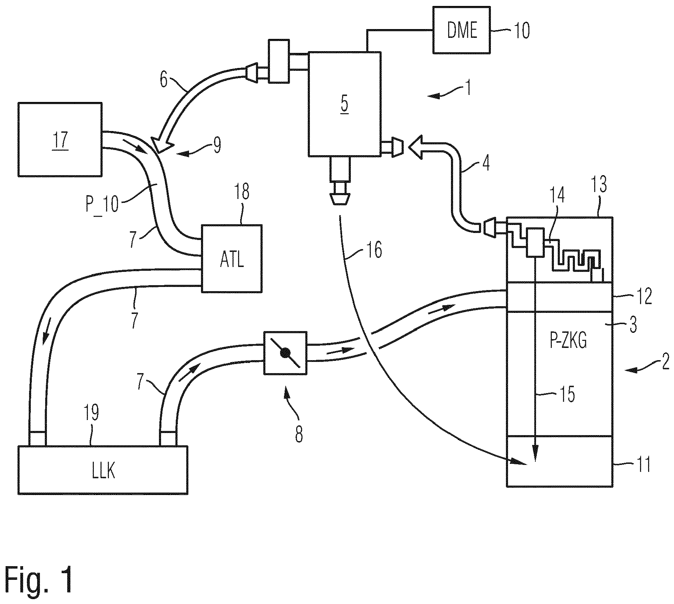

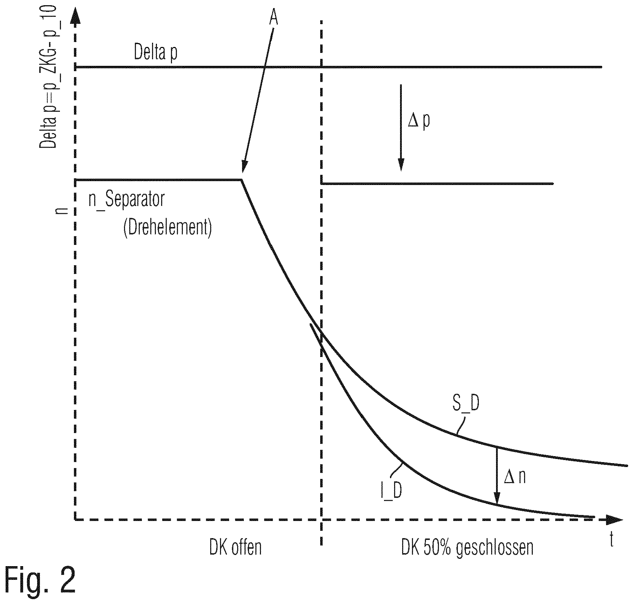

Wie in Figur 1 dargestellt ist, wird der aktive Ölabscheider zwischen der Brennkraftmaschine und dem Abgasturbolader angeordnet und somit, mit Öltröpfchen und mit Kohlenwasserstoffresten kontaminiertem Rohgas versorgt. Das gereinigte Reingas wird anschließend dem Abgasturbolader zugeführt. Die zukünftige Gesetzgebung schreibt vor, diesen Vorgang (Dichtheit des Blow-By-Systems) mittels OBD (On-Board-Diagnose) zu überwachen. Hierzu wird das folgende erfindungsgemäße Konzept vorgeschlagen:
Vom Tellerseparator kann standardmäßig ein Drehzahlsignal des Drehelementes abgegriffen werden. Sobald der Antrieb des Tellerseparators abgeschaltet wird, ist das Auslaufverhalten des Drehelementes von einem Differenzdruck abhängig, welcher auf den Separator eingangsseitig und ausgangsseitig wirkt. Dieses Verhalten ist der Figur 2 zu entnehmen. Sobald sich durch eine Leckage des Systems der anliegende Differenzdruck ändert, wirkt sich dies in Form einer verringerten Drehzahl auf den Auslauf des Drehelementes aus. So entsteht ein für die Diagnose nutzbarer Drehzahlunterschied. Dieser kann ohne zusätzliche Sensorik erfindungsgemäß von der On-Board-Diagnose zur Absicherung der korrekten Funktionsfähigkeit des Systems genutzt werden.

Für das erfindungsgemäße Verfahren sind somit keine zusätzlichen Sensoren notwendig, es stellt eine zuverlässige Lösung dar, bei gleichzeitig gesetzmäßiger Absicherung der korrekten Funktion.

Im Folgenden ist die Erfindung anhand von zwei Figuren näher erläutert.
- Figur 1: zeigt schematisch eine Kurbelgehäuseentlüftungseinrichtung für eine Brennkraftmaschine.
- Figur 2: zeigt in einem Diagramm die Auswirkung einer Leckage auf eine Drehzahlauslaufkurve.

Figur 1 zeigt schematisch eine Kurbelgehäuseentlüftungseinrichtung 1 für eine Brennkraftmaschine 2. Die Brennkraftmaschine 2 weist eine Ölwanne 11, ein Kurbelgehäuse 3, einen Zylinderkopf 12 sowie eine Zylinderkopfhaube 13 auf. In der Zylinderkopfhaube 13 ist eine Ölvorabscheidung 14, ein sog. passives Öllabyrinth, angeordnet.

Beim Betrieb der Brennkraftmaschine 2 liegt im Kurbelgehäuse 3 ein Innendruck P_ZKG vor, der üblicherweise etwas höher ist als ein Ansaug(unter)druck P_10, der auch in einem Ansaugtrakt 7 vor einem Verdichter eines Abgasturboladers 18 anliegt. Dieser Überdruck entsteht durch die Blow-By-Gase, die durch den Verbrennungsprozess an den Kolbenringen vorbei in das Kurbelgehäuse 3 gedrückt werden. Durch diesen leichten Überdruck werden die Blow-By-Gase durch die Ölvorabscheidung 14 gefördert, wobei die größten Öltröpfchen abgeschieden und über einen ersten Ölrücklauf 15 zurück in die Ölwanne 11 gefördert werden. Diese vorgereinigten Blow-By-Gase werden anschließend weiter durch eine Entlüftungsleitung 4 in einen Zentrifugal-Ölabscheider 5, einen Tellerseparator, gefördert. In dem Zentrifugal-Ölabscheider 5 ist ein aktiv antreibbares, nicht beziffertes und nicht dargestelltes Drehelement zum Abscheiden von Öltröpfchen aus dem Rohgas (Rohgas ist Abgas mit Öltröpfchennebel) angeordnet, wobei der Zentrifugal-Ölabscheider 5 ein Drehzahlsignal des Drehelements ausgibt, das von einem Steuergerät (DME / DDE) 10 der Brennkraftmaschine 2 ausgewertet wird. Das in dem Zentrifugal-Ölabscheider 5 aus dem Rohgas abgeschiedene Öl fließt durch einen zweiten Ölrücklauf 16 ebenfalls zurück in die Ölwanne 11.

Das von dem Zentrifugal-Ölabscheider 5 gereinigte Rohgas wird als sog. Reingas durch eine Reingasleitung 6 über eine Einleitstelle 9 in den Ansaugtrakt 7 der Brennkraftmaschine 2 geführt und mit einer Frischluft, die bereits einen Ansauggeräuschdämpfer 17 passiert hat, vermischt. In dem Ansaugtrakt 7 herrscht, wie oben bereits ausgeführt, vor dem Abgasturbolader 18 der Ansaug(unter)druck P_10. Der nicht bezifferte Verdichter des Abgasturboladers 18 verdichtet die Frischluft und das Reingas und führt dieses Gemisch einem Ladeluftkühler 19 zu. Weiter passiert das Frischgas-Reingas-Gemisch ein Drosselelement 8, beispielsweise eine Drosselklappe und wird dann dem Zylinderkopf 12 der Brennkraftmaschine 2 zur Verbrennung zugeführt. Eine Strömungsrichtung von Frischgas und Reingas und rückgeführtem Öl ist jeweils durch Pfeile symbolisch dargestellt.

Mit dieser in Figur 1 dargestellten Kurbelgehäuseentlüftungseinrichtung 1 für eine Brennkraftmaschine 2 kann nun erfindungsgemäß ein OBD-fähiges Verfahren zum Überwachen der Kurbelgehäuseentlüftungseinrichtung 1 dargestellt werden. Mit folgenden Verfahrensschritten:
- Betreiben der Brennkraftmaschine 2 und ständiges Messen einer Drehzahl des Drehelements,
- Ausschalten oder in einem Schubbetrieb der Brennkraftmaschine 2, nicht mehr Antreiben des Drehelements und Schließen des Drosselelements 8,
- Weiter Messen der Drehzahl des Drehelements während eines Auslaufes des Drehelements,
- Vergleichen der Drehzahl des Drehelements während des Auslaufs mit einer abgespeicherten Sollwert-Drehzahl-Auslaufkurve,
- Bei einem von dem Sollwert-Drehzahlkurve abweichenden Abfall der Drehzahl des Drehelements, ausgeben eines OBD-fähigen Störsignals oder einer OBD-fähigen Störmeldung.

Dieser Sachverhalt ist in Figur 2 in einem Diagramm dargestellt.

Über eine Y-Achse des Diagramms sind eine Drehzahl n_Separator (Drehelement) sowie ein Differenzdruck Delta p = p_ZGK - p_10 jeweils ohne Einheiten dargestellt. Über eine X-Achse ist die Zeit t ebenfalls ohne Einheit dargestellt.

Die Drehzahl des Drehelements n_Separator bleibt bis zu einem Zeitpunkt A konstant. Am Zeitpunkt A wird das Drehelement ausgeschalten. Eine Soll-Drehzahl-Auslaufkurve ist mit S_D beziffert. Liegt nun in der Kurbelgehäuseentlüftungseinrichtung 1 eine Leckage vor, so stellt sich ein Differenzdruck Δp für das Drehelement ein. Dieses Δp ist p_ZKG - p_10. Aufgrund der veränderten Druckverhältnisse, die das Drehelement nun eingangsseitig und ausgangsseitig "sieht" verändert sich die Soll-Drehzahlauslaufkurve zu einer Ist-Drehzahlauslaufkurve I_D. Die Differenz der Solldrehzahlauslaufkurve S_D und der Ist-Drehzahlauslaufkurve I_D stellt sich durch ein Δn der Drehzahl beim Auslauf des Drehelements dar. Wird nun beim Vergleichen der Drehzahl des Drehelements während des Auslaufs mit einem abgespeicherten Soll-Drehzahlauslaufkurve eine Differenz festgestellt, so wird ein Störsignal (Störmeldung) ausgegeben, welches von dem Steuergerät 10 auswertbar ist.

Somit ist erfindungsgemäß ein OBD-fähiges Verfahren zur Überwachung einer Kurbelgehäuseentlüftungseinrichtung 1 dargestellt, für das keine zusätzlichen Sensoren notwendig sind, welches eine zuverlässige Lösung darstellt und gleichzeitig eine gesetzmäßige Absicherung darstellt.

### BEZUGSZEICHENLISTE

- 1.: Kurbelgehäuseentlüftungseinrichtung
- 2.: Brennkraftmaschine
- 3.: Kurbelgehäuse
- 4.: Entlüftungsleitung
- 5.: Zentrifugal-Ölabscheider
- 6.: Reingasleitung
- 7.: Ansaugtrakt
- 8.: Drosselelement
- 9.: Einleitstelle
- 10.: Steuergerät
- 11.: Ölwanne
- 12.: Zylinderkopf
- 13.: Zylinderkopfhaube
- 14.: Ölvorabscheidung
- 15.: erster Ölrücklauf
- 16.: zweiter Ölrücklauf
- 17.: Ansauggeräuschdämpfer
- 18.: Abgasturbolader
- 19.: Ladeluftkühler
- A: Abschalten des Drehelementes
- P_ZKG: Druck im Kurbelgehäuse
- P_10: Druck vor Drosselelement (Ansaug(unter)druck)
- Δ n: Drehzahldifferenz
- S_D: Soll-Drehzahlauslaufkurve
- I_D: Ist-Drehzahlauslaufkurve

## Patentansprüche

1. Verfahren zum Überwachen einer Kurbelgehäuseentlüftungseinrichtung (1) einer Brennkraftmaschine (2), wobei Rohgas aus einem Kurbelgehäuse (3) der Brennkraftmaschine (2) durch eine Entlüftungsleitung (4) einem Zentrifugal-Ölabscheider (5) mit einem aktiv antreibbaren Drehelement zum Abscheiden von Öltröpfchen aus dem Rohgas zugeführt wird und als Reingas durch eine Reingasleitung (6) einem Ansaugtrakt (7) der Brennkraftmaschine (2) mit einem Drosselelement (8), das in einer Strömungsrichtung einer Frischluft nach einer Einleitstelle (9) der Reingasleitung (6) in den Ansaugtrakt (7) in dem Ansaugtrakt (7) angeordnet ist, zugeführt wird, zur anschließenden Verbrennung in einem Brennraum der Brennkraftmaschine (2), wobei der Zentrifugal-Ölabscheider (5) ein Drehzahlsignal des Drehelementes ausgibt, das von einem Steuergerät (10) der Brennkraftmaschine (2) ausgewertet wird,
**gekennzeichnet, durch** folgende Verfahrensschritte:
- Betreiben der Brennkraftmaschine (2) und ständiges Messen einer Drehzahl des Drehelementes,
- Ausschalten oder in einem Schubbetrieb der Brennkraftmaschine (2), nicht mehr Antreiben des Drehelementes und Schließen des Drosselelementes (8),
- Weiter Messen der Drehzahl des Drehelementes während eines Auslaufes des Drehelementes,
- Vergleichen der Drehzahl des Drehelementes während des Auslaufes mit einer abgespeicherten Sollwert-Drehzahlauslaufkurve,
- Bei einem von der Sollwert-Drehzahlauslaufkurve abweichenden Abfall der Drehzahl des Drehelementes, Ausgeben eines Störsignales.
